# DEMANDE DE BREVET EUROPEEN

(11) **EP 1 115 227 A1**
(43) Date de publication de la demande: **11.07.2001**
(21) Numéro de dépôt: 00460076.3
(22) Date de dépôt: 28.12.2000
(51) Int. Cl.: H04L 12/26, H04Q 3/00

(54) **Dispositif et procédé d'analyse de protocole**

(30) Priorité: 06.01.2000 FR 0000141
(71) Demandeur: Wandel & Goltermann CTS, 35517 Cesson Sevigne (FR)
(72) Inventeur: Herve, Yann, 35230 Saint Erblon (FR); Rolland, Philippe, 35520 La Meziere (FR); Arnaiz, David, 35000 Rennes (FR)
(74) Mandataire: Vidon, Patrice

(57) **Abrégé**

L'invention concerne un dispositif d'analyse de protocole (16) permettant l'analyse d'une séquence de trames capturées, et ayant éventuellement fait l'objet d'un pré-traitement, correspondant à des échanges entre au moins deux terminaux (131, 132) d'un réseau de communication (11).

Selon la présente invention, le dispositif comprend des moyens de construction d'un journal d'échanges selon une structure élémentaire regroupant des paramètres d'échange dont les valeurs sont contenues dans et/ou extraites desdites trames, et, pour chacun desdits échanges, ledit journal d'échanges comprend les valeurs des paramètres d'échange de ladite structure élémentaire.

## Description

Le domaine de l'invention est celui de l'analyse de protocole pour les réseaux de communication.

Plus précisément, l'invention concerne un dispositif d'analyse de protocole permettant l'analyse d'une séquence de trames capturées, et ayant éventuellement fait l'objet d'un pré-traitement, correspondant à des échanges entre au moins deux terminaux d'un réseau de communication.

On rappelle que les réseaux numériques permettent l'interconnexion de terminaux aussi divers que des téléphones, des télécopieurs, des ordinateurs, ou des terminaux de paiement par exemple. Ils utilisent différents supports physiques comme la paire téléphonique, la fibre optique ou le câble coaxial, ainsi que diverses topologies comme Ethernet, Token-Ring, ou une boucle locale par exemple. Par ailleurs, un grand nombre de protocoles sont mis en oeuvre, qui sont adaptés à la topologie utilisée et/ou à la nature des applications supportées. Les éléments de protocole échangés sur le réseau sont communément appelés trames. Ils constituent un arrangement de bits dont la syntaxe et la sémantique sont définies au travers de normes et de recommandations liées à un protocole.

Les protocoles peuvent être classés en 2 catégories principales:
- les protocoles orientés connexion comme le RNIS (Réseau Numérique à Intégration de Services), X.25, ou ATM par exemple ;
- les protocoles orientés sans connexion comme TCP/IP par exemple (en anglais « Transmission Control Protocol/Internet Protocol » qui est un protocole fédérateur utilisé en particulier pour Internet).

Les protocoles orientés connexion nécessitent l'établissement d'une connexion préalable à tout échange de données. Cette connexion est réalisée par l'échange de trames spéciales, dites de signalisation. Les protocoles sans connexion, en revanche, autorisent l'échange de données ou de paquets de données, sans qu'une quelconque phase de connexion soit requise.

Dans le cadre de l'analyse de protocole, les techniques de détection d'un échange entre deux terminaux de communication diffèrent donc fortement selon que le protocole de l'échange est un protocole orienté connexion ou un protocole orienté sans connexion.

Parmi les protocoles orientés connexion, on distingue encore les protocoles mettant en oeuvre une signalisation de type usager-réseau, tels que le RNIS, et les protocoles mettant en oeuvre une signalisation de bout en bout, tels que TCP/IP, pour lesquels les techniques de détection des échanges diffèrent également.

En effet, dans le cadre des protocoles orientés connexion mettant en oeuvre une signalisation de terminal à terminal, tels que le protocole TCP/IP par exemple (en anglais "Transmission Control Protocol/ Internet Protocol"), les informations relatives au début et à la fin d'un échange, dites informations de synchronisation, sont échangées dans le même canal de transmission que les données elles-mêmes. On parle alors de transmission "dans la bande" des informations de synchronisation.

De plus, ces informations sont échangées entre le terminal émetteur et le terminal destination de l'échange, c'est-à-dire entre les deux entités situées aux extrémités de l'échange.

Dans le cadre des protocoles orientés connexion mettant en oeuvre une signalisation entre un terminal et le réseau, tels que le RNIS, en revanche, les informations de signalisation sont échangées par l'intermédiaire d'un canal dédié, appelé canal D dans le cadre du protocole RNIS. On dit alors que les informations de signalisation sont échangées "hors bande".

De plus, les échanges de signalisation ne sont mis en oeuvre qu'entre le terminal émetteur et le réseau ; c'est ce dernier qui met ensuite en relation le terminal émetteur et le terminal destination, en ouvrant un canal dédié à l'échange des informations utiles à la communication, du type voix ou données par exemple. Ce canal est appelé canal B pour le protocole RNIS.

Il faut par ailleurs noter que, dans le cadre du protocole RNIS, le canal D peut également servir à l'échange de données de communication dans le cadre d'un protocole de type X.25. Il est par conséquent nécessaire de pouvoir mettre en oeuvre une technique de détection des échanges permettant de distinguer des trames de signalisation RNIS de trames de données de type X.25.

Les techniques mises en oeuvre pour la détection des trames relatives à un échange donné entre deux terminaux d'un réseau de communication diffèrent donc fortement selon que le protocole régissant l'échange met en oeuvre une signalisation de bout en bout ou une signalisation usager-réseau, en raison des différences de techniques de signalisation et de synchronisation évoquées ci-dessus.

De plus, dans le cadre des protocoles orientés sans connexion, aucune signalisation n'est mise en oeuvre entre les entités communicantes. L'identification des échanges est réalisée en analysant les adresses des terminaux participant à l'échange.

Par conséquent, l'analyse de protocole orienté connexion met en oeuvre des techniques très éloignées de celles utilisées pour l'analyse de protocole orienté sans connexion.

Les communications connaissent un essor tel, que les réseaux de communication constituent aujourd'hui le nerf des entreprises. Ils représentent par ailleurs une dépense importante tant en terme d'investissement initial, ou d'abonnement, que de coûts de communication.

Il est donc primordial d'assurer la gestion et la maintenance de ces réseaux afin de minimiser les interruptions de services (par anticipation des problèmes, et/ou détection et réparation des pannes), d'optimiser les performances (en augmentant la disponibilité du réseau, et/ou en réduisant les temps de connexion, par exemple) et de réduire les coûts (en déterminant quel type d'abonnement est le plus approprié à l'activité concernée, et/ou en optimisant l'usage du réseau par exemple).

Les solutions actuelles pour la recherche de défaut de fonctionnement sont des analyseurs de protocole capables de capturer les trames circulant sur le réseau, puis de les décoder sur un écran, dans un langage compréhensible par l'homme du métier, sous forme de chaînes de caractères ASCII ou hexadécimales par exemple. Ces analyseurs peuvent prendre diverses formes comme, par exemple, un boîtier connecté à un ordinateur ou un testeur/analyseur autonome possédant son propre écran.

L'analyse de protocole peut s'effectuer en temps réel, par décodage instantané des trames reçues à l'écran, ou en temps différé, à partir d'un fichier mémorisant les trames capturées antérieurement.

Un inconvénient de cette technique de l'art antérieur est que, lorsque le trafic observé sur le réseau est élevé, ou lorsque la capture s'est poursuivie sur une longue période, le nombre de trames à examiner devient très important (plusieurs dizaines de milliers de trames par exemple) rendant quasiment impossible la localisation du défaut.

De plus, lorsque la complexité du problème dépasse sa compétence, le technicien d'intervention sur site enregistre les trames dans un fichier de capture puis transmet ce fichier à un collègue plus expérimenté.

Un autre inconvénient de cette technique de l'art antérieur est donc que cette opération n'est possible que si le fichier est de taille suffisamment faible, et notamment s'il ne dépasse pas la capacité de stockage d'une disquette, ou s'il reste transmissible par message électronique par exemple.

Pour réduire le nombre de trames à explorer ou à stocker, des mécanismes de filtrage de trames ont été envisagés. Cependant, dans l'état de la technique, les critères de filtrage sont généralement des critères de bas niveau, comme le type d'élément de protocole, la référence d'appel, ou la cause de libération par exemple, et ne permettent donc pas un filtrage efficace des trames à explorer.

En outre, la détermination des critères de filtrage nécessite une pré-analyse des trames souvent complexe. Ainsi, dans le cas des Réseaux Numériques à Intégration de Services, le positionnement d'un filtre sur une référence d'appel nécessite de déterminer au préalable cette référence d'appel, en recherchant le message d'établissement de l'échange entre terminaux qui est en cause. Or, cet échange ne peut généralement être identifié que par les adresses des terminaux impliqués dans cet échange, ou par l'heure à laquelle il a eu lieu. Il est donc nécessaire de procéder à une pré-analyse souvent longue et délicate pour extraire ces informations, et pouvoir ultérieurement positionner le filtre adéquat.

Afin de pouvoir procéder à l'étape de pré-analyse, il est impératif pour l'utilisateur de maîtriser le protocole concerné, ce qui n'est souvent pas le cas des techniciens d'intervention, dont le rôle s'arrête souvent à la collecte des informations.

Encore un autre inconvénient de cette technique de l'art antérieur est que le positionnement des filtres est une étape souvent fastidieuse et longue à mettre en oeuvre. En effet, la recherche des critères de filtrage à sélectionner est difficile car les trames des différents échanges s'entremêlent, et il est donc difficile de localiser tout d'abord, et d'isoler ensuite, les trames liées à un échange donné.

Encore un autre inconvénient de cette technique de l'art antérieur est que les critères de filtrage utilisés ne correspondent pas à une réalité pratique. En effet, les trames à examiner au cours de l'analyse de protocole sont généralement liées à un échange défectueux particulier entre deux terminaux, repérés par leur adresse dans le réseau. Or, les techniques de l'art antérieur n'offrent généralement que des filtres de bas niveau appliqués aux trames, et ne permettent pas de positionner des filtres prédéfinis sur les échanges en eux-mêmes.

Par ailleurs, il est aujourd'hui important de pouvoir surveiller les réseaux de communication, ainsi que de pouvoir optimiser leurs performances, et minimiser les coûts de communication. Les techniques de l'art antérieur mises en oeuvre dans ce but consistent en des stations de gestion de réseau qui interrogent les terminaux du réseau de communication à l'aide de protocoles de gestion de réseau comme par exemple le protocole SNMP (en anglais « Simple Network Management Protocol ») ou en des analyseurs de protocoles comptant et analysant de manière non intrusive les trames circulant sur le réseau.

Les statistiques sur les échanges entre terminaux, constituant la base essentielle d'information pour les missions de surveillance et d'optimisation, sont ensuite présentées sous forme de tables "statiques" non paramétrables.

Un inconvénient de cette technique de l'art antérieur est que lorsque l'écran est de petite taille (ce qui est le cas d'un testeur/analyseur autonome pourvu de son propre écran) certains paramètres n'apparaissent pas. En effet, il n'y a pas assez de place sur l'écran pour afficher les valeurs de tous les paramètres nécessaires à l'établissement des statistiques sur les échanges entre terminaux.

Un autre inconvénient de cette technique de l'art antérieur est que l'utilisateur doit faire défiler successivement tous les paramètres de l'échange pour observer les paramètres non présents à l'écran.

L'invention a notamment pour objectif de pallier ces inconvénients de l'art antérieur.

Plus précisément, un objectif de l'invention est de fournir un dispositif permettant de faciliter et d'accélérer l'analyse de protocole.

Un autre objectif de l'invention est de mettre en oeuvre un dispositif qui permette de localiser et d'isoler facilement les trames relatives à certains échanges entre des terminaux d'un réseau de communication.

Encore un autre objectif de l'invention est de fournir un dispositif qui fonctionne en temps réel et/ou en différé à partir d'une séquence de trames capturées au préalable.

Un autre objectif de l'invention est d'offrir un dispositif de surveillance du réseau permettant de visualiser simultanément un grand nombre, voire la totalité des paramètres des échanges entre terminaux.

L'invention a également pour objectif de fournir un dispositif d'analyse de protocole pouvant être adapté à des écrans de taille modeste, et notamment aux écrans des testeurs de réseaux.

Encore un autre objectif de l'invention est de fournir un dispositif pour l'analyse de protocole et la surveillance de réseau qui soit adapté à tous les types de protocole.

Ces objectifs, ainsi que d'autres qui apparaîtront par la suite sont atteints selon l'invention, à l'aide d'un dispositif d'analyse de protocole permettant l'analyse d'une séquence de trames capturées, et ayant éventuellement fait l'objet d'un pré-traitement, correspondant à des échanges entre au moins deux terminaux d'un réseau de communication.

Selon l'invention, un tel dispositif comprend des moyens de construction d'un journal d'échanges selon une structure élémentaire regroupant des paramètres d'échange dont les valeurs sont contenues dans et/ou extraites de trames capturées sur un canal de signalisation, ledit protocole étant un protocole du type orienté connexion, mettant en oeuvre au moins un canal de signalisation et au moins un canal de données, et, pour chacun desdits échanges, ledit journal d'échanges comprend les valeurs des paramètres d'échange de ladite structure élémentaire. Selon l'invention, un tel dispositif comprend en outre des moyens de traitement sélectif, au sein dudit journal d'échanges, d'au moins certains desdits échanges et/ou d'au moins certaines desdites trames et/ou d'au moins certaines desdites valeurs des paramètres d'échanges.

Par paramètres d'échange, on entend ici non seulement les paramètres techniques liés à l'échange, tels que les adresses des terminaux participant à l'échange par exemple, mais également les paramètres statistiques liés à l'échange, comme la durée ou le coût de l'échange.

Les moyens de traitement sélectif permettent d'agir sur la structure élémentaire et/ou sur le contenu du journal d'échanges.

Par échange, on entend ici un échange de données et/ou une conversation entre deux terminaux d'un réseau de communication et/ou entre un terminal et le réseau lui-même, précédé ou non de l'établissement préalable d'une connexion. Le terme d'« échange » désigne donc tout échange de données et/ou conversation survenant entre deux terminaux de communication, et/ou tout échange entre un terminal et le réseau de communication, pour un protocole orienté connexion ou pour un protocole orienté sans connexion.

Ainsi, l'invention repose sur une approche tout à fait nouvelle et inventive de l'analyse de protocole. En effet, l'invention repose notamment sur la construction d'un journal d'échanges à partir de trames capturées, ayant éventuellement fait l'objet d'un pré-traitement, tel qu'un horodatage, par exemple dans un dispositif de capture des trames situé en amont du dispositif de la présente invention. Ce pré-traitement consiste en un ajout d'informations dans les trames capturées. Dans la suite de la description, par trame, on entend indifféremment des trames capturées ou des trames complétées résultant d'un pré-traitement (ajout d'informations) de trames capturées.

Ce journal d'échanges est construit selon une structure élémentaire, qui regroupe la totalité ou au moins certains des paramètres d'échange. Les valeurs de ces paramètres peuvent être contenues dans les trames, comme l'adresse du terminal destinataire de l'échange par exemple. Les valeurs des paramètres d'échange peuvent aussi être extraites des trames, c'est-à-dire déduites d'informations contenues dans les trames. Par exemple, la durée d'un échange est déduite par traitement des dates et heures de début et de fin des échanges, contenues dans les trames (suite à l'horodatage précité).

L'utilisateur du dispositif d'analyse de protocole selon l'invention peut donc directement visualiser l'ensemble (ou seulement une partie ; cf. ci-après) des paramètres liés à un échange, sous une configuration conviviale, et sans avoir à procéder à une étape pénible et délicate de décodage des trames. La structure élémentaire du journal d'échanges peut aussi, par exemple, ne regrouper que certains des paramètres d'échange associés à un échange entre des terminaux du réseau de communication ou entre un terminal et le réseau lui-même. L'utilisateur du dispositif d'analyse de protocole a alors accès aux valeurs des paramètres d'échange correspondantes.

Un tel journal d'échanges permet notamment à un utilisateur une analyse simplifiée des séquences de trames protocolaires d'activation et de désactivation d'un service supplémentaire, par exemple dans le cadre du protocole RNIS (pour Réseau Numérique à Intégration de Service). Par service supplémentaire, on entend ici un service à valeur ajoutée, comme par exemple le renvoi d'appels ou la conférence à trois. Les paramètres d'échange regroupés dans la structure élémentaire du journal peuvent alors comprendre l'heure d'activation et de désactivation du service supplémentaire, un identifiant du terminal ayant émis une requête de service supplémentaire ou encore le type de service demandé.

La structure élémentaire d'un tel journal d'échanges peut par exemple permettre la gestion simultanée d'échanges de type RNIS et de type X.25, de séquences protocolaires d'activation et de désactivation des services supplémentaires RNIS, et d'échanges faisant intervenir des terminaux locaux et/ou distants. Cette liste n'est bien sûr pas exhaustive, mais est indicative de la diversité des paramètres d'échanges pouvant figurer dans un tel journal.

Avantageusement, ladite structure élémentaire regroupe en outre des paramètres d'échanges dont les valeurs sont contenues dans et/ou extraites de trames capturées sur ledit canal de données.

Ainsi, un tel journal d'échanges permet en outre d'établir des statistiques sur les informations circulant sur un canal de données du réseau de communication considéré.

Selon une caractéristique avantageuse de l'invention, le dispositif comprend des moyens de tri des échanges, au sein du journal d'échanges, selon l'un au moins des paramètres d'échange.

Un utilisateur peut donc classer les échanges entre les terminaux du réseau de communication, ou entre un terminal et le réseau, en sélectionnant l'un au moins des paramètres d'échange comme critère de tri. Il peut ainsi isoler, puis accéder, par exemple aux trames relatives à un échange donné.

On peut aussi envisager qu'il choisisse la durée de l'échange comme critère de tri : il peut alors avantageusement observer l'ensemble des échanges classés par ordre croissant ou décroissant de durée, ce qui lui permet d'avoir facilement accès, selon son choix, à l'échange le plus court, ou à l'échange le plus long par exemple.

Selon une autre caractéristique avantageuse de l'invention, le dispositif comprend des moyens de filtrage des échanges, au sein du journal d'échanges, selon l'un au moins des paramètres d'échange.

Un utilisateur peut donc filtrer les échanges, de manière à ne conserver que certains d'entre eux, en sélectionnant l'un au moins des paramètres d'échange comme critère de filtrage. On peut par exemple envisager que l'utilisateur choisisse l'adresse d'un terminal comme critère de filtrage, de manière à ne conserver que les échanges auxquels le terminal concerné a pris part.

Il est clair que les moyens de tri et de filtrage peuvent être utilisés de façon combinée. En d'autres termes, l'utilisateur peut mettre en oeuvre les moyens de filtrage à l'issue d'un tri préalable (ou inversement). Par exemple, après avoir trié les échanges par ordre croissant de durée, on peut envisager qu'il choisisse de ne conserver que les échanges ayant duré moins d'une minute, et qu'il sélectionne à cet effet le critère de filtrage correspondant.

Selon une variante avantageuse de l'invention, le dispositif comprend des premiers moyens de sélection d'au moins un échange au sein du journal d'échanges et des moyens d'affichage de trames et/ou de valeurs de paramètres d'échange selon la sélection.

Un utilisateur peut ainsi choisir un ou plusieurs échange(s), par exemple après le(s) avoir isolé(s) grâce aux moyens de tri et de filtrage, et afficher certaines des trames qui constituent le(s) échange(s) considéré(s), et/ou certaines des valeurs des paramètres relatives à ou aux échange(s) considéré(s).

L'affichage des trames est particulièrement avantageux pour l'analyse de protocole, au cours de la recherche d'une panne ou d'un défaut de fonctionnement du réseau de communication par exemple. L'affichage des paramètres d'échange permet, quant à lui, d'avoir accès aux propriétés d'un échange, qui constituent des informations essentielles pour la surveillance du réseau et l'optimisation de ses performances.

Selon une première variante avantageuse de l'invention, les moyens d'affichage permettent l'affichage d'au moins certaines des trames correspondant à ou aux échange(s) sélectionné(s).

L'utilisateur peut ainsi avoir accès, après sélection d'un échange par exemple, aux trames relatives à l'échange considéré. On peut ainsi envisager, qu'après sélection d'un échange, par exemple par des moyens préalables de tri et de filtrage, il souhaite voir affiché l'ensemble ou une partie des trames relatives à cet échange.

Selon une deuxième variante avantageuse de l'invention, les moyens d'affichage permettent en outre l'affichage d'au moins certaines des trames correspondant aux échanges non sélectionnés, et les trames correspondant à ou aux échange(s) sélectionné(s) sont repérées au sein de l'ensemble des trames affichées.

L'utilisateur peut en effet, après avoir sélectionné un ou plusieurs échange(s), choisir d'afficher, non seulement les trames relatives à ce(s) échange(s), mais également une pluralité de trames correspondant à des échanges non sélectionnés. Il peut ainsi comparer les trames du ou des échange(s) sélectionné(s) aux trames d'autres échanges non sélectionnés, ce qui est particulièrement avantageux dans le cadre de l'analyse de protocole par exemple. Pour faciliter la comparaison, les trames du ou des échange(s) sélectionné(s) sont repérées au sein de l'ensemble des trames affichées.

Selon une autre variante avantageuse de l'invention, les moyens d'affichage permettent l'affichage, pour le(s) échange(s) sélectionné(s), de la valeur d'au moins un des paramètres d'échange appartenant à la structure élémentaire du journal d'échanges et/ou de la valeur d'au moins un des paramètres d'échange n'appartenant pas à la structure élémentaire du journal d'échanges.

Après avoir sélectionné un ou plusieurs échanges, l'utilisateur peut ainsi afficher l'ensemble (ou seulement une partie) des valeurs des paramètres du ou des échanges sélectionné(s), et notamment la valeur de l'ensemble ou seulement certains des paramètres n'appartenant pas à la structure élémentaire du journal d'échanges. En effet, l'ensemble des valeurs des paramètres d'échange constitue les propriétés de l'échange, qui sont des informations essentielles dans le cadre de la surveillance du réseau et de l'optimisation de ses performances.

Avantageusement, le dispositif selon l'invention en objet comprend des moyens de configuration de la structure élémentaire du journal d'échanges, permettant de sélectionner le(s) paramètre(s) d'échange constitutifs de la structure élémentaire précitée et/ou de modifier l'ordre des paramètres d'échange au sein de cette même structure élémentaire.

Un utilisateur du dispositif d'analyse de protocole de l'invention peut ainsi configurer la structure élémentaire du journal de manière dynamique, pour l'adapter à ses besoins. Ces moyens de configuration permettent à l'utilisateur de sélectionner, en cours d'utilisation du dispositif, les paramètres d'échanges dont il souhaite voir apparaître les valeurs dans le journal, en fonction par exemple du type de problème identifié sur le réseau, ou du type d'analyse qu'il souhaite effectuer.

Selon une variante avantageuse de l'invention, le dispositif comprend des seconds moyens de sélection d'une structure élémentaire prédéterminée parmi une liste d'au moins une structure élémentaire prédéterminée.

L'utilisateur peut ainsi choisir la structure élémentaire du journal d'échanges parmi un ou plusieurs profil(s) prédéterminé(s) de structure élémentaire, de manière, par exemple, à configurer le journal d'échanges pour l'adapter au type d'activité courante. On peut ainsi envisager de prévoir trois structures élémentaires adaptées respectivement à la recherche de défauts de fonctionnement, à l'optimisation des performances du réseau de communication et à l'optimisation des coûts de communication par exemple. Il est clair que cette liste n'est pas exhaustive.

Selon une caractéristique avantageuse de l'invention, le dispositif permet en outre l'analyse d'au moins un autre type de protocole.

L'invention est ainsi avantageusement adaptée, par exemple, à l'analyse de protocoles orientés sans connexion, ou à l'analyse de protocoles orientés connexion mettant en oeuvre une signalisation de bout en bout, tels que TCP/IP.

L'invention concerne également un procédé d'analyse de protocole permettant l'analyse d'une séquence de trames capturées, et ayant éventuellement fait l'objet d'un pré-traitement, correspondant aux échanges entre au moins deux terminaux d'un réseau de communication, comprenant une étape de construction d'un journal d'échanges selon une structure élémentaire regroupant des paramètres d'échange, dont les valeurs sont contenues dans et/ou extraites desdites trames, et tel que, pour chacun des échanges précités, le journal d'échanges comprend les valeurs des paramètres d'échange de la structure élémentaire précitée. Selon l'invention, un tel procédé comprend en outre au moins une étape de traitement sélectif, au sein dudit journal d'échanges, d'au moins certains desdits échanges et/ou d'au moins certaines desdites trames et/ou d'au moins certaines desdites valeurs des paramètres d'échanges..

L'invention concerne encore un programme d'ordinateur comprenant des séquences d'instructions adaptées à la mise en oeuvre du procédé d'analyse de protocole décrit précédemment.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique de la mise en oeuvre du dispositif selon l'invention ;
- la figure 2 illustre le journal d'échanges mis en oeuvre dans le dispositif présenté en figure 1 ;
- les figures 3 à 5 présentent des exemples de mise en oeuvre des moyens de tri des échanges au sein du journal d'échanges illustré par la figure 2 ;
- la figure 6 présente un synoptique des critères de filtrage pouvant être sélectionnés par l'utilisateur au cours de la mise en oeuvre des moyens de filtrage des échanges au sein du journal d'échanges illustré par la figure 2 ;
- la figure 7 illustre les premiers moyens de sélection d'un ou plusieurs échange(s) du journal illustré par la figure 2 et les moyens d'affichage des trames selon la sélection ;
- les figures 8 à 10 illustrent la personnalisation du journal des échanges présenté en figure 2 par modification de la configuration de la structure élémentaire ;
- la figure 11 présente un synoptique de la liste de structures élémentaires prédéterminées qui peuvent être sélectionnées par l'utilisateur pour modifier la configuration du journal des échanges présenté en figure 2 ;
- la figure 12 illustre les premiers moyens de sélection d'un ou plusieurs échange(s) du journal illustré par la figure 2 et les moyens d'affichage des valeurs des paramètres d'échange selon la sélection ;

Le principe général de l'invention repose sur la construction d'un journal d'échanges regroupant, pour chacun des échanges, les valeurs de paramètres d'échange contenues dans et/ou extraites des trames capturées.

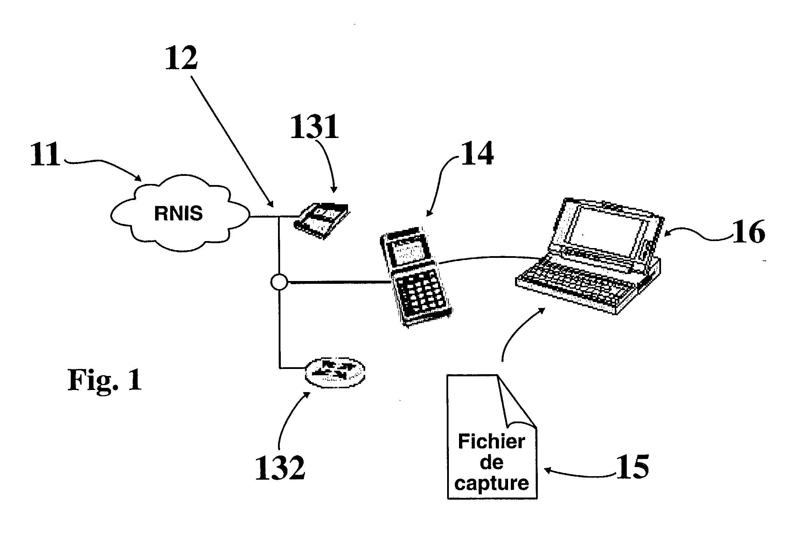

On présente, en relation avec la figure 1, un mode de mise en oeuvre du dispositif selon l'invention, pour l'analyse de protocole et/ou la surveillance d'un réseau de communication, dans le cadre d'un protocole du type orienté connexion, tel que le RNIS (Réseau Numérique à Intégration de Services) par exemple. On rappelle néanmoins que l'invention s'applique à tout type de protocole.

On rappelle tout d'abord les différentes méthodes mises en oeuvre, dans le cadre de l'invention, pour détecter les échanges entre terminaux, dans le cas des protocoles orientés connexion d'une part, et des protocoles orientés sans connexion d'autre part.

Comme mentionné précédemment, on distingue, parmi les protocoles orientés connexion, les protocoles mettant en oeuvre une signalisation de type usager-réseau, tels que le RNIS, et les protocoles mettant en oeuvre une signalisation de bout en bout, tels que TCP/IP.

Dans le cadre des protocoles orientés connexion mettant en oeuvre une signalisation entre le terminal et le réseau, c'est le réseau qui est responsable de l'établissement d'une connexion de bout en bout. Des éléments de protocole de signalisation sont alors échangés entre un terminal et le réseau, et non directement entre un terminal et un terminal distant. Ainsi, pour le protocole RNIS par exemple, la signalisation est échangée entre un terminal (un téléphone ou un ordinateur par exemple) et le commutateur d'accès au réseau RNIS.

Le commutateur d'accès interprète alors la signalisation et propage la demande de connexion, au travers du réseau, vers un équipement distant. Cette propagation peut être mise en oeuvre à l'aide d'un protocole distinct de celui qui est utilisé à l'interface entre le terminal et le réseau. Ainsi, pour le protocole RNIS, le routage de l'appel par le réseau est mis en oeuvre à l'aide du protocole SS7.

Par ailleurs, il est fréquent pour ce type de protocole que la signalisation usager/réseau emprunte un canal de transmission différent du canal utilisé pour la transmission des données. C'est le cas notamment pour les protocoles RNIS, ATM et "frame relay" (en français "relais de trames") lorsque des circuits virtuels commués sont utilisés.

De plus, dans le cadre du RNIS par exemple, certains échanges de signalisation ont pour but d'activer des services supplémentaires proposés par le réseau, ainsi que décrit précédemment.

Dans le cadre des protocoles mettant en oeuvre une signalisation usager/réseau, la détection d'échanges entre terminaux, et l'analyse des protocoles correspondants nécessite donc de pouvoir détecter et analyser une signalisation riche et complexe. Notamment, la détection d'échanges entre terminaux, ou entre un terminal et le réseau pour ce type de protocole nécessite :
- d'accéder à un canal de signalisation spécifique, lorsque la signalisation s'effectue "hors bande" ;
- d'identifier les trames de protocole de signalisation lorsque plusieurs protocoles coexistent ;
- d'analyser ces trames de signalisation ;
- d'identifier les échanges entre terminaux en utilisant les adresses des terminaux au sein du réseau, ainsi que certaines références de connexion ;
- d'identifier en outre les échanges entre un terminal et le réseau, pour l'activation ou la désactivation de services à valeur ajoutée proposés par le réseau, tels que le renvoi d'appels ou la conférence à trois par exemple.

Dans le cadre des protocoles orientés connexion mettant en oeuvre une signalisation de bout en bout, en revanche, le réseau ne contrôle pas la connexion, et est transparent à la signalisation. C'est notamment le cas des sessions de type TCP, qui sont établies au dessus du protocole orienté sans connexion IP. Le réseau se contente alors de router des datagrammes IP individuellement, et ne joue aucun rôle dans l'établissement et le maintien de la connexion TCP. La signalisation est dans ce cas réduite à la transmission d'informations de contrôle simples, directement entre les deux terminaux souhaitant communiquer. De telles informations de contrôle sont notamment transmises dans la bande avec les données utiles. La détection des échanges est donc beaucoup plus simple que dans le cas des protocoles de type RNIS, puisque, d'une part, il suffit de scruter le canal de transmission unique, et, d'autre part, la signalisation est fortement simplifiée, en raison notamment de l'absence de signalisation destinée à l'invocation de services à valeur ajoutée.

Dans le cadre des protocoles orientés sans connexion, enfin, aucune signalisation n'est échangée entre terminaux, ou entre terminal et réseau. Ainsi, dans le cadre du protocole IP, l'identification des échanges se fait par analyse des adresses IP des terminaux.

La figure 1 illustre donc le cas le plus complexe de l'analyse d'un protocole orienté connexion mettant en oeuvre une signalisation sophistiquée de type terminal-réseau.

Sur la figure 1, le dispositif selon l'invention est implémenté sur un ordinateur 16. Des terminaux de communication 131 et 132, qui sont par exemple respectivement un téléphone et un routeur appartiennent à un même réseau de communication 11 de type RNIS. Un instrument de test 14 permet de capturer les trames circulant, au cours d'un échange auquel participe le terminal 131 ou le terminal 132, sur le bus RNIS 12 (différents types d'instruments de test peuvent être utilisés suivant la nature de l'interface RNIS sur laquelle doit être effectuée la mesure).

Les terminaux 131 et 132 et l'instrument de test 14 sont tous trois connectés au bus 12. Les trames capturées par l'instrument de test 14 peuvent faire l'objet d'un pré-traitement, comme l'horodatage des trames en fonction de leur heure de capture. Les trames capturées sont alors modifiées par l'instrument de test 14 par ajout d'une indication horaire avant d'être transmises en temps réel à l'ordinateur 16. L'instrument de test 14 et l'ordinateur 16 sont connectés par une liaison série. Selon un autre mode de réalisation de l'invention, l'instrument de test 14 est relié à l'ordinateur 16 par le port parallèle.

Le dispositif selon l'invention, implémenté sur l'ordinateur 16, peut alors traiter en temps réel les trames capturées par l'instrument de test 14 en créant un journal des échanges et en mettant à jour en temps réel les valeurs des paramètres d'échange. Selon une variante de l'invention, le dispositif implémenté sur l'ordinateur 16 décode les trames en temps réel, afin de les présenter à l'utilisateur dans un langage compréhensible, comme une chaîne de caractères ASCII ou hexadécimale par exemple.

Le dispositif selon l'invention peut également construire un journal des échanges à partir des trames regroupées dans un fichier de capture 15, correspondant aux trames capturées préalablement par l'instrument de test 14 : le traitement mis en oeuvre est alors un traitement différé, et tient compte de l'information d'horodatage (date/heure de début et de fin) associée aux trames par l'instrument de test 14. Dans l'art antérieur, l'utilisation d'un fichier de capture était notamment indispensable lorsque la complexité du problème à résoudre dépassait la compétence du technicien d'intervention sur site. Le technicien créait alors un fichier de capture de trames qu'il transmettait à un expert pour analyse. La présente invention permet, dans certains cas, au technicien, de transmettre à l'expert un fichier de capture de trames simplifié (mise en oeuvre des mécanismes de tri) et de taille éventuellement réduite (mise en oeuvre des mécanismes de filtrage).

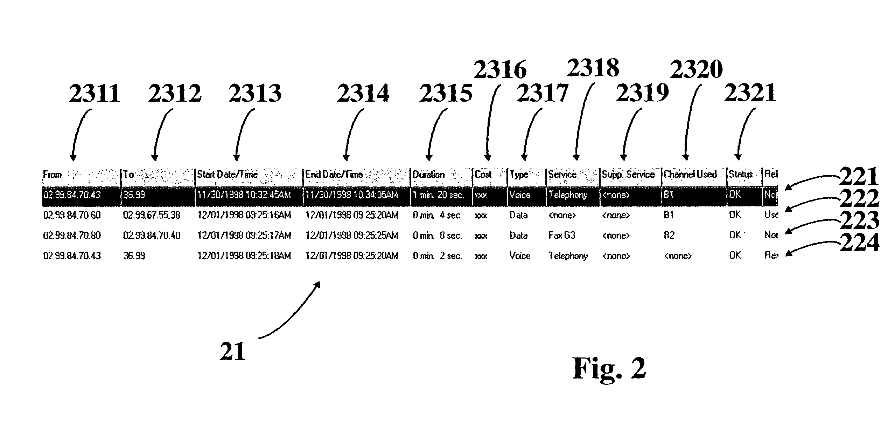

La figure 2 illustre le journal des échanges mis en oeuvre dans le dispositif 16 présenté en figure 1. Ce journal des échanges est structuré sous forme d'un tableau 21. La structure élémentaire du journal regroupe un certain nombre de paramètres d'échange de façon à ce que chaque colonne 2311 à 2321 du tableau 21 corresponde à un paramètre d'échange. Ainsi, sur la figure 2, la colonne 2311 du tableau 21 correspond à l'adresse du terminal ayant demandé l'établissement d'une connexion, la colonne 2312 correspond à l'adresse du terminal destinataire et la colonne 2313 indique la date et l'heure de début de l'échange.

Chaque ligne 221 à 224 du tableau 21 correspond à un échange donné, et regroupe, par colonne, les valeurs des paramètres de l'échange. A titre d'exemple, l'échange illustré par la ligne 222 du tableau 21 a duré quatre secondes : la valeur « 0 min. 4 sec. » est donc portée à l'intersection de la ligne 222 et de la colonne 2315 correspondant au paramètre de durée de l'échange dans le tableau 21.

Le dispositif selon l'invention mémorise donc, en temps réel, ou à partir d'un fichier de capture, les valeurs des paramètres des échanges et les inscrit dans le journal des échanges présenté sur la figure 2. Tous les échanges sont pris en compte depuis le début de la capture de trames: l'analyse de protocole débute donc au début de la capture de trames dans le cas d'un fonctionnement en temps réel, ou au début du fichier de capture dans le cas d'une analyse différée.

On donne à titre indicatif une liste non exhaustive des différents paramètres d'un échange dans le cas d'un protocole orienté connexion du type RNIS :
- état de la connexion (connexion en cours d'établissement, en échec, etc.)
- adresse et sous-adresse RNIS origine (c'est-à-dire l'adresse du terminal requérant la connexion)
- adresse et sous-adresse RNIS de destination (c'est-à-dire l'adresse du terminal destinataire)
- date de début de l'échange
- heure de début de l'échange
- date de fin de l'échange
- heure de fin de l'échange
- durée de l'échange
- coût de l'échange (en unités de taxation)
- type de service: voix, données, etc.
- cause de libération
- localisation de la source de libération
- services utilisés
- compléments de service invoqués
- canal utilisé
- temps d'établissement
- temps de libération

Certains paramètres comme l'état de la connexion sont symbolisés par une icône dans le tableau 21 du journal des échanges.

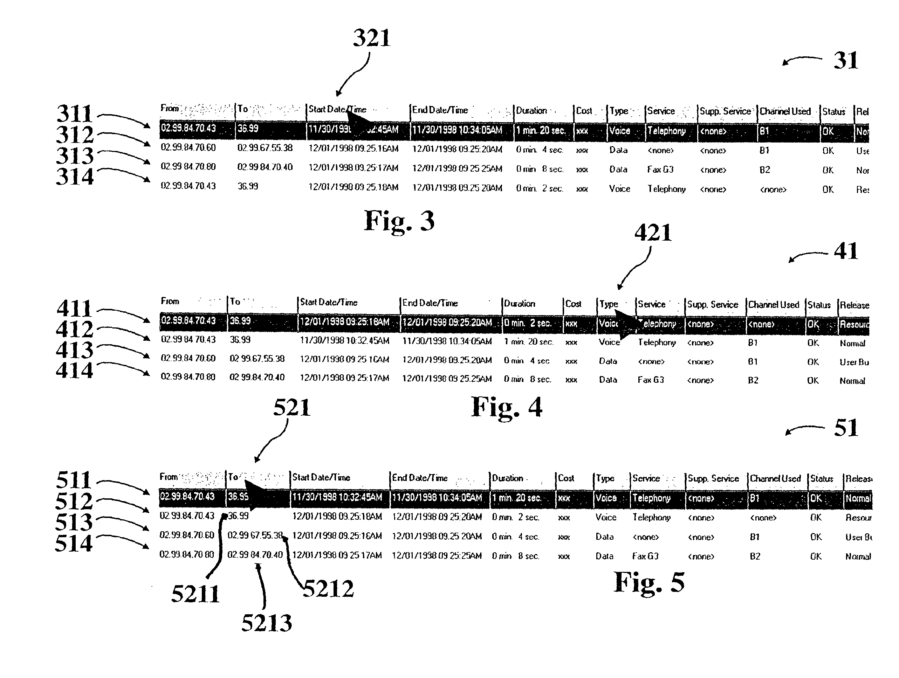

La mise en oeuvre des moyens de tri est illustrée par les figures 3 à 5 et se fait par sélection, comme critère de tri, de l'un des paramètres de l'échange figurant dans la structure élémentaire du journal. Chaque titre de colonne constitue une zone active que l'utilisateur peut sélectionner par une action au clavier et/ou à l'aide de la souris de l'ordinateur sur lequel le dispositif est implémenté (par clic ou double-clic par exemple). Une telle action a pour conséquence un tri automatique des différentes lignes du journal des échanges, et par conséquent des échanges eux-mêmes.

La figure 3 représente l'état du journal 31, contenant quatre échanges 311 à 314, après que l'utilisateur a sélectionné le paramètre 321 "Start Date/Time" (date et heure de début) comme critère de tri des échanges. Selon un mode de réalisation de l'invention, lorsque l'utilisateur clique avec la souris de l'ordinateur sur le titre "Start Date/Time" de la colonne 321 correspondant au paramètre des date et heure de début de l'échange, les échanges 311 à 314 du journal sont rangés par ordre chronologique d'établissement de connexion.

La figure 4 représente l'état du journal 41, contenant quatre échanges 411 à 414, après que l'utilisateur a sélectionné le paramètre 421 "Type" (type de service utilisé) comme critère de tri des échanges. Selon un mode de réalisation de l'invention, lorsque l'utilisateur clique avec la souris de l'ordinateur sur le titre "Type" de la colonne 421 correspondant au paramètre du type de service de l'échange (à savoir, si l'échange a consisté en un échange de voix ou de données par exemple), les échanges 411 à 414 du journal sont rangés par type de service. Les échanges 411 et 412 correspondent ainsi à des échanges vocaux, et les échanges 413 et 414 à des échanges de données.

La figure 5 représente l'état du journal 51, contenant quatre échanges 511 à 514, après que l'utilisateur a sélectionné le paramètre 521 "To" (adresse du terminal destinataire de l'échange) comme critère de tri des échanges. Selon un mode de réalisation de l'invention, lorsque l'utilisateur clique avec la souris de l'ordinateur sur le titre "To" de la colonne 521 correspondant au paramètre de l'adresse du terminal destinataire, les échanges 511 à 514 du journal sont rangés selon ce critère. Les échanges 511 et 512 ont ainsi comme terminal destinataire le terminal correspondant à l'adresse 5211, et les échanges 513 et 514 ont pour terminal destinataire le terminal correspondant respectivement à l'adresse 5212 et à l'adresse 5213.

Ainsi, l'utilisateur ayant à résoudre un problème relatif à une destination donnée (repérée par une adresse RNIS spécifique) trie les échanges selon le critère correspondant à la colonne "To" (adresse du terminal destinataire). Il fait ensuite défiler, dans le journal des échanges, l'ensemble des lignes du tableau 51, à la recherche de la première connexion présentant l'adresse RNIS en cause. Une fois le premier échange présentant cette adresse repéré, l'ensemble des autres échanges présentant cette même adresse sont situés dans les lignes suivantes du tableau 51.

La mise en oeuvre de ces moyens de tri permet le classement des échanges, et facilite donc le repérage des échanges mis en cause dans un type de défaut de fonctionnement du réseau. Elle peut suffire à isoler un échange défectueux dans le cas où le nombre d'échanges présentant une même valeur de paramètres est restreint. Par exemple, il est aisé de repérer l'échange défectueux ayant pour terminal destinataire le terminal d'adresse 5212, car seul l'échange 513 présente cette adresse RNIS de destination au sein du journal des échanges.

Selon un mode de réalisation de l'invention, l'utilisateur peut filtrer les échanges, dans le cas où les moyens de tri mis en oeuvre n'ont pas suffi à localiser un échange défectueux donné.

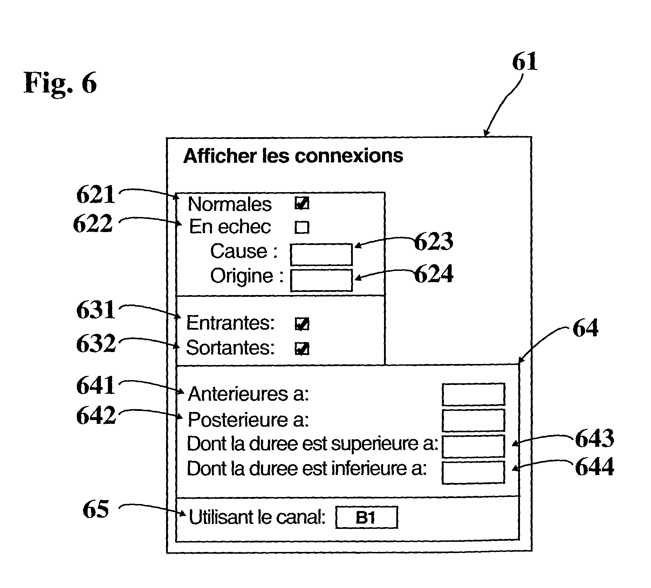

La figure 6 présente un synoptique des critères de filtrage pouvant être sélectionnés par l'utilisateur au cours de la mise en oeuvre des moyens de filtrage des échanges.

Une boîte de dialogue 61 permet à l'utilisateur de choisir les échanges qu'il souhaite voir affichés. Selon un mode de réalisation de l'invention, l'utilisateur peut remplir la boîte de dialogue par action clavier et/ou par un clic de la souris. Il peut ainsi choisir d'afficher les échanges normaux par sélection du critère 621 et/ou en échec par sélection du critère 622. Les critères 623 et 624, correspondant respectivement à la cause et à l'origine de l'échec d'un échange, peuvent être renseignés dans la boîte de dialogue, après sélection du critère 622, de manière à n'afficher qu'une partie des échanges en échec par exemple.

Les critères 631 et 632 permettent d'afficher les échanges correspondant à des connexions respectivement entrantes et sortantes. Les critères 641 et 642 correspondent aux paramètres de date et heure respectivement de début et de fin de l'échange. Les critères 643 et 644 représentent le paramètre de durée de l'échange ; le critère 643 permet de fixer une durée minimale des échanges à afficher, et le critère 644 permet quant à lui de fixer une durée maximale des échanges à afficher. Un critère 65 permet d'afficher tous les échanges ayant utilisé un canal de communication donné.

La figure 6 illustre ici le cas où un utilisateur souhaite afficher tous les échanges normaux 621, correspondant à des connexions entrantes 631 ou sortantes 632 et ayant utilisé le canal B1, selon le renseignement porté dans le champ 65.

On notera qu'à la différence des analyseurs de protocoles de l'art antérieur, pour lesquels les moyens de filtrage s'appliquent sur les trames capturées, les moyens de filtrage mis en oeuvre selon l'invention permettent de filtrer directement les échanges eux-mêmes. Les filtres offerts sont donc de haut niveau et le choix des critères de filtrage par l'utilisateur ne nécessite pas une analyse préalable des trames, qui représente une tâche complexe, nécessitant de la part de l'utilisateur une certaine expertise. En effet, ils sont directement déductibles des paramètres figurant dans la structure élémentaire du journal des échanges.

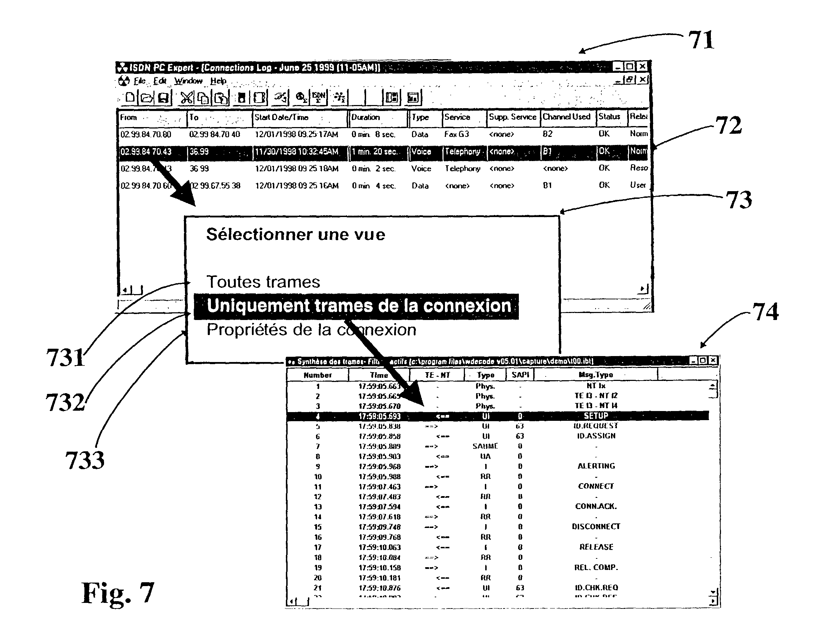

Selon un mode de réalisation préférentiel de l'invention, l'utilisateur trie et filtre les échanges du journal, puis met en oeuvre les moyens de sélection d'un échange et d'affichage des trames correspondantes. Ainsi qu'illustré sur la figure 7, l'utilisateur sélectionne un échange, par exemple en double cliquant sur la ligne du tableau 71 correspondante (ici la ligne 72). Selon une variante de l'invention, l'utilisateur peut sélectionner simultanément plusieurs échanges, par exemple par action conjointe du clavier et de la souris.

Une boîte de dialogue 73 apparaît alors à l'écran et lui permet de choisir l'une des options suivantes :
- affichage de toutes les trames capturées depuis le début de l'analyse ou de toutes les trames figurant dans le fichier de capture dans le cas d'une analyse différée. Cette option peut être activée par la sélection par action clavier ou clic souris du champ 731. Dans ce cas, l'ensemble des trames, et non exclusivement celles relatives à l'échange sélectionné sont affichées à l'écran. On prévoit que les trames de l'échange sélectionné sont repérées au sein de l'ensemble des trames affichées. Selon un mode de réalisation de l'invention, ce repérage consiste en ce que la trame courante est la première trame de l'échange (généralement un message d'établissement). D'autres techniques de repérage peuvent bien sûr être envisagées (par exemple, soulignement ou affichage en gras des trames de l'échange sélectionné).
   Selon une variante de l'invention, une partie seulement des trames correspondant à des échanges non sélectionnés (par exemple, les cent trames précédant le début de l'échange sélectionné et les cent trames suivant la fin de l'échange sélectionné) sont affichées à l'écran, en plus des trames de l'échange sélectionné.
   Ce mode permet à l'utilisateur de pouvoir simultanément observer les trames relatives à l'échange sélectionné et à d'autres échanges, à titre de comparaison par exemple.
- affichage exclusif des trames relatives à l'échange sélectionné. Cette option peut être activée par la sélection par action clavier ou clic souris du champ 732. Le dispositif selon l'invention met alors automatiquement en oeuvre des moyens de tri et de filtrage pour ne conserver et n'afficher que les trames correspondant à l'échange sélectionné.
- affichage de l'ensemble des valeurs des paramètres de l'échange sélectionné, et notamment, de valeurs de paramètres ne figurant pas dans la structure élémentaire du journal des échanges. Par paramètres d'échange, on entend bien sûr ici non seulement les paramètres techniques liés à l'échange, mais également les paramètres statistiques relatives à l'échange, comme déjà mentionné précédemment. Cette option peut être activée par la sélection par action clavier ou clic souris du champ 733 « Propriétés de la connexion ».

Après sélection du champ 732, ainsi qu'illustré sur la figure 7, l'utilisateur obtient l'affichage à l'écran des trames relatives à l'échange 72 sélectionné dans le tableau 71. Selon une variante avantageuse de l'invention, les moyens d'affichage mettent également en oeuvre des moyens de décodage des trames, de manière à ce qu'elles apparaissent à l'écran dans un langage compréhensible par l'utilisateur, par exemple sous forme de chaînes de caractères ASCII ou hexadécimales.

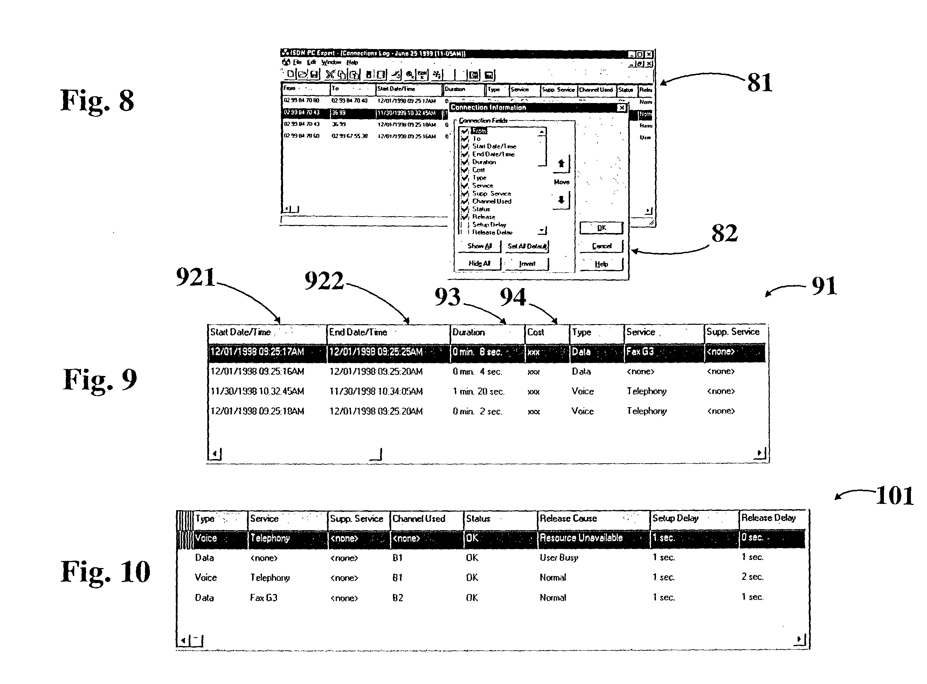

Selon un mode de réalisation avantageux de l'invention, le journal des échanges est personnalisable par l'utilisateur. Grâce à une fenêtre 82 illustrée en figure 8, l'utilisateur peut sélectionner les différents paramètres constitutifs de la structure élémentaire du journal des échanges 81. Chaque ligne de la fenêtre 82 correspond à un paramètre d'échange figurant dans une colonne du journal des échanges 81. La présence d'un signe 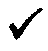 en regard d'un paramètre signifie que le paramètre doit être affiché. Inversement, son absence indique que le paramètre doit être caché.

Selon une variante de l'invention, l'ordre des paramètres d'échange peut également être modifié au sein de la structure élémentaire du journal des échanges. Le déplacement relatif des paramètres dans le journal, c'est-à-dire le déplacement relatif des colonnes constitutives de la structure élémentaire du journal 81, s'opère par un déplacement relatif des lignes dans la fenêtre 82 par action clavier ou clic souris.

Le choix des paramètres d'échange constitutifs de la structure élémentaire du journal des échanges, ainsi que le choix de l'ordre dans lequel ils apparaissent au sein du journal permet de concevoir un "tableau de bord" parfaitement adapté à l'activité courante de l'utilisateur: tous les paramètres nécessaires à cette activité sont ainsi affichés à l'écran sans qu'il soit nécessaire d'agir avec le clavier ou la souris pour les faire apparaître.

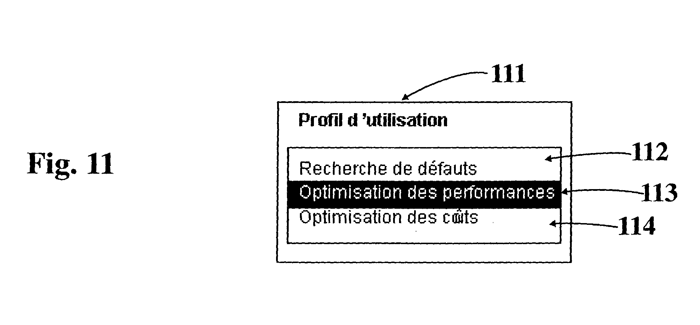

Selon un mode de réalisation de l'invention, on prévoit de mettre à la disposition de l'utilisateur une liste 111 de structures élémentaires (ou profils) prédéterminé(e)s illustrée par la figure 11. L'utilisateur peut ainsi choisir une structure élémentaire prédéterminée adaptée à une activité de recherche de défaut, par sélection du champ 112, à une activité d'optimisation des performances du réseau de communication, par sélection du champ 113, ou à une activité d'optimisation des coûts de communication, par sélection du champ 114. Ces différentes sélections peuvent s'effectuer par action clavier ou par clic souris selon deux modes de réalisation de l'invention.

La figure 9 présente la structure élémentaire du journal des échanges 91 adaptée à une activité du type "Optimisation des coûts de communication". Les paramètres relatifs aux heures de connexion 921 et 922, à la durée des échanges 93, et aux coûts des échanges 94 ont été placés en priorité sur la gauche de l'écran.

La figure 10 illustre la structure élémentaire du journal des échanges 101 adaptée à une activité de type « Optimisation des performances ».

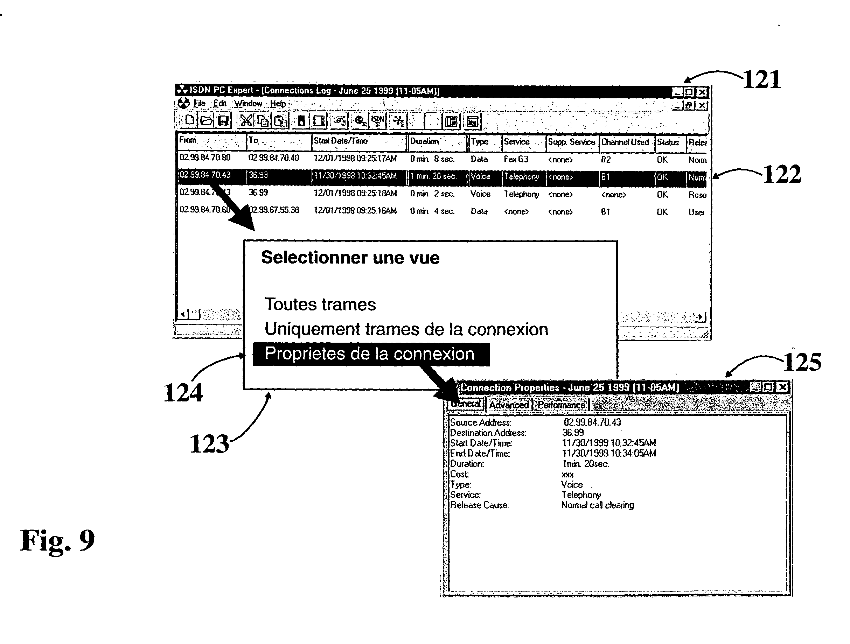

Outre l'affichage des trames décodées, l'utilisateur peut afficher l'intégralité des paramètres associés à un échange comme présenté sur la figure 12. Après sélection d'un échange 122 au sein du journal des échanges 121, une boîte de dialogue 123 apparaît à l'écran. La sélection du champ 124 « Propriétés de la connexion » entraîne l'ouverture d'une fenêtre 125 dans laquelle apparaissent tous les paramètres relatifs à l'échange sélectionné, y compris ceux qui ne constituent pas la structure élémentaire du journal des échanges 121. Selon une variante de l'invention, la fenêtre 125 ne contient que certains des paramètres de l'échange n'appartenant pas à la structure élémentaire du journal 121.

Ceci permet donc à l'utilisateur de faire un zoom sur un échange et d'observer les éventuels paramètres non affichés dans le journal.

Selon un mode de réalisation de l'invention, les informations sont organisées dans cet écran sous forme de diverses tables accessibles sélectivement par l'utilisateur.

## Revendications

1. Dispositif d'analyse de protocole (16) permettant l'analyse d'une séquence de trames capturées, et ayant éventuellement fait l'objet d'un pré-traitement, correspondant à des échanges (311 à 314 ; 411 à 414 ; 511 à 514 ; 72 ; 122) entre au moins deux terminaux (131, 132) d'un réseau de communication (11),
caractérisé en ce qu'il comprend des moyens de construction d'un journal d'échanges (31 ; 41 ; 51 ; 71 ; 81 ; 91 ; 101 ; 121) selon une structure élémentaire regroupant des paramètres d'échange (321 ; 421 ; 521 ; 921, 922, 93, 94) dont les valeurs sont contenues dans et/ou extraites de trames capturées sur un canal de signalisation, ledit protocole étant un protocole du type orienté connexion, mettant en oeuvre au moins un canal de signalisation et au moins un canal de données,
et en ce que, pour chacun desdits échanges, ledit journal d'échanges comprend les valeurs des paramètres d'échange de ladite structure élémentaire,
et en ce qu'il comprend en outre des moyens de traitement sélectif, au sein dudit journal d'échanges, d'au moins certains desdits échanges et/ou d'au moins certaines desdites trames et/ou d'au moins certaines desdites valeurs des paramètres d'échanges.

2. Dispositif selon la revendication 1, caractérisé en ce que ladite structure élémentaire regroupe en outre des paramètres d'échanges dont les valeurs sont contenues dans et/ou extraites de trames capturées sur ledit canal de données.

3. Dispositif selon l'une quelconque des revendications 1 et 2, caractérisé en ce qu'il comprend des moyens de tri desdits échanges au sein dudit journal d'échanges selon l'un au moins desdits paramètres d'échange.

4. Dispositif selon l'une quelconque des revendications 1 à 3, caractérisé en ce qu'il comprend des moyens de filtrage desdits échanges au sein dudit journal d'échanges selon l'un au moins desdits paramètres d'échange.

5. Dispositif selon l'une quelconque des revendications 1 à 4, caractérisé en ce qu'il comprend des premiers moyens de sélection d'au moins un échange au sein dudit journal d'échanges et des moyens d'affichage de trames et/ou de valeurs de paramètres d'échange selon ladite sélection.

6. Dispositif selon la revendication 5, caractérisé en ce que lesdits moyens d'affichage permettent l'affichage d'au moins certaines des trames correspondant audit au moins un échange sélectionné.

7. Dispositif selon la revendication 6, caractérisé en ce que lesdits moyens d'affichage permettent en outre l'affichage d'au moins certaines des trames correspondant aux échanges non sélectionnés, et en ce que lesdites au moins certaines des trames correspondant audit au moins un échange sélectionné sont repérées au sein de l'ensemble desdites trames affichées.

8. Dispositif selon la revendication 5, caractérisé en ce que lesdits moyens d'affichage permettent l'affichage, pour ledit au moins un échange sélectionné, de la valeur d'au moins un des paramètres d'échange appartenant à ladite structure élémentaire et/ou de la valeur d'au moins un des paramètres d'échange n'appartenant pas à ladite structure élémentaire.

9. Dispositif selon l'une quelconque des revendications 1 à 8, caractérisé en ce qu'il comprend des moyens de configuration (82) de ladite structure élémentaire permettant de sélectionner le(s) paramètre(s) d'échange constitutifs de ladite structure élémentaire et/ou de modifier l'ordre desdits paramètres d'échange au sein de ladite structure élémentaire.

10. Dispositif selon l'une quelconque des revendications 1 à 9, caractérisé en ce qu'il comprend des seconds moyens de sélection d'une structure élémentaire prédéterminée parmi une liste (111) d'au moins une structure élémentaire prédéterminée.

11. Dispositif selon l'une quelconque des revendications 1 à 9, caractérisé en ce qu'il permet en outre l'analyse d'au moins un autre type de protocole.

12. Procédé d'analyse de protocole permettant l'analyse d'une séquence de trames capturées, et ayant éventuellement fait l'objet d'un pré-traitement, correspondant aux échanges entre au moins deux terminaux d'un réseau de communication,
caractérisé en ce qu'il comprend une étape de construction d'un journal d'échanges selon une structure élémentaire regroupant des paramètres d'échange dont les valeurs sont contenues dans et/ou extraites desdites trames,
et en ce que, pour chacun desdits échanges, ledit journal d'échanges comprend les valeurs des paramètres d'échange de ladite structure élémentaire,
et en ce qu'il comprend au moins une étape de traitement sélectif, au sein dudit journal d'échanges, d'au moins certains desdits échanges et/ou d'au moins certaines desdites trames et/ou d'au moins certaines desdites valeurs de paramètres d'échanges.

13. Programme informatique caractérisé en ce qu'il comprend des séquences d'instructions adaptées à la mise en oeuvre d'un procédé d'analyse de protocole selon la revendication 12, lorsque ledit programme est exécuté par au moins un micro-processeur..

14. Programme informatique enregistré sur un support utilisable dans un ordinateur et/ou un instrument de test, comprenant des instructions de code de programme lisibles par au moins un micro-processeur pour effectuer, à partir d'une séquence de trames capturées, et ayant éventuellement fait l'objet d'un pré-traitement, ladite séquence correspondant aux échanges entre au moins deux terminaux d'un réseau de communication :
- une étape de construction d'un journal d'échanges selon une structure élémentaire regroupant des paramètres d'échange dont les valeurs sont contenues dans et/ou extraites desdites trames,
ledit journal d'échanges comprenant les valeurs des paramètres d'échange de ladite structure élémentaire, pour chacun desdits échanges ; et
- au moins une étape de traitement sélectif, au sein dudit journal d'échanges,
d'au moins certains desdits échanges et/ou d'au moins certaines desdites trames et/ou d'au moins certaines desdites valeurs de paramètres d'échanges.
